# EUROPÄISCHE PATENTSCHRIFT

(11) **EP 1 960 701 B1**
(45) Veröffentlichungstag und Bekanntmachung des Hinweises auf die Patenterteilung: **24.06.2009**
(21) Anmeldenummer: 06818503.2
(22) Anmeldetag: 14.11.2006
(51) Int. Cl.: F16H 63/34, F16H 63/48

(54) **VERRIEGELUNGSVORRICHTUNG**
LOCKING APPARATUS
DISPOSITIF DE VERROUILLAGE

(30) Priorität: 17.12.2005 DE 102005060583
(43) Veröffentlichungstag der Anmeldung: 27.08.2008
(73) Patentinhaber: ZF Friedrichshafen AG, 88038 Friedrichshafen (DE)
(72) Erfinder: MAYR, Karlheinz, A-6900 Bregenz (AT)
(86) Internationale Anmeldenummer: PCT/EP2006/010876
(87) Internationale Veröffentlichungsnummer: WO 2007/068314

(56) Entgegenhaltungen:
- DE-A1- 2 505 358
- DE-A1- 10 347 667

## Beschreibung

Die Erfindung betrifft eine Verriegelungsvorrichtung, insbesondere einer Parksperreneinrichtung eines mit einem Automatgetriebe ausgeführten Antriebsstranges eines Fahrzeugs gemäß der im Oberbegriff des Patentanspruches 1 näher definierten Art.

Aus der DE 103 47 667 A1 und der EP 1 408 260 A1 ist eine Verriegelungsvorrichtung für das Verriegeln der Bewegung eines Kolbens bekannt. Ein Anker bzw. dessen Ankerstange eines Elektromagneten wirkt auf ein Betätigungselement, welches wiederum mit einem Rastelement derart zusammenarbeitet, dass das Rastelement in einer Verriegelungsstellung die Bewegung des Kolbens blockiert bzw. das Rastelement in einer Entriegelungsstellung die Bewegung des Kolbens freigibt.

Das Betätigungselement ist mit einer bauteileigenen Federkraftvorspannung ausgeführt, die in radialer Richtung auf die Kolbenstange zu gerichtet ist. Des Weiteren ist das Betätigungselement entweder als ein Kunststoffteil ausgeführt, das auf einem Joch des Elektromagneten aufgespritzt oder auf dieses aufgeclipst ist, oder als Stanzteil ausgebildet, welches über eine zur Verstärkung der Federkraftvorspannung des Betätigungselementes vorgesehenen Spannfeder an dem Joch befestigt ist.

Die Ausführung des Betätigungselementes als aufgespritztes oder aufgeclipstes Kunststoffteil erfordert nachteilhafterweise ein Betätigungselement mit großen Wandstärken und im Wirkbereich zwischen dem Rastelement und dem Betätigungselement einen großen Überdeckungsbereich, um die erforderlichen Haltekräfte, die im Allgemeinen bei Parksperreneinrichtungen hoch sind, zur Verfügung stellen zu können. Dies ist jedoch unerwünscht, da der zur Verfügung stehende Bauraum besonders bei Fahrzeuggetrieben äußerst limitiert ist.

Des Weiteren hat die Ausgestaltung des Betätigungselementes als über eine Vorspannfeder mit dem Joch befestigtes Stanzteil den Nachteil, dass zur Gewährleistung der Funktionsweise der Verriegelungseinheit hohe Anforderungen an die Fertigungstoleranzen gestellt sind. Zudem ist das Betätigungselement über seine gesamte Länge mit einer derartigen Bauteilelastizität ausgeführt, dass einerseits ein radiales Verschwenken eines mit dem Rastelement zusammenwirkenden Endes des Betätigungselements gegenüber dem am Joch befestigten anderen Ende möglich ist. Diese Bauteilelastizität führt jedoch zu einer derart unerwünschten Verformung des Betätigungselementes im Angriffsbereich eines Bolzens, dass ein Deaktivieren der Wirkverbindung zwischen dem Betätigungselement und dem Rastelement nicht möglich ist.

Die DE 25 05 358 A1 offenbart einen Arbeits- und Verstrebungszylinder, in dem eine hohle Kolbenstange verschiebbar angeordnet ist. Die Kolbenstange wird in üblicher Weise durch Zufuhr eines Druckmittels betätigt, das dem Zylinder über eine Öffnung zuführbar ist. Des Weiteren sind im Zylinder mehrere elastische, radial ausgefederte Rastglieder vorgesehen, welche sich in Längsrichtung einer Kammer erstrecken. Die Kolbenstange weist eine nach Art eines Ringwulstes ausgebildete ringförmige Verdickung auf, auf der die Rastglieder gleiten können und sich dabei öffnen.

Die dem Kolben zugewandte Seite der Verdickung ist so ausgebildet, dass sie im Zusammenwirken mit den etwa hakenförmigen Enden der Rastglieder eine Verriegelung von Zylinder und Kolbenstange bewirken, aber andererseits auch eine Entriegelung ermöglicht. Die Lage der Verdickung ist so gewählt, dass bei Anlage der Kolbenstange gegen einen Boden die Rastglieder hinter der Verdickung und gegen deren Fläche einrasten. Um die Rastglieder in ihrer verriegelten Stellung zu halten ist ferner als Verriegelungsglied ein etwa rohrförmig ausgebildetes Teil vorgesehen, das flüssigkeitsdicht geführt in der Kammer verschiebbar ist und die Rastglieder in einer ersten Stellung umschließt und sie dadurch fest in Anlage gegen die Fläche der Verdickung hält.

Hierbei ist von Nachteil, dass die Rastglieder und die Kolbenstange in verriegeltem Zustand derart einander anliegen, dass die beim Verrasten wirkende Haltekraft in den Rastgliedern ein Biegemoment erzeugt, welchem nur durch entsprechende Biegesteifigkeit der Rastglieder entgegenzuwirken ist, weshalb die Rastglieder entsprechend zu dimensionieren sind. Dies führt jedoch nachteilhafterweise zu hohen Herstellungskosten, einem hohen Bauteilgewicht sowie zu einem großen Bauraumbedarf.

Eine Verriegelungsvorrichtung für zwei durch ein Druckmittel relativ zueinander bewegbare Glieder, wie z. B. einen Verschiebekolben und einen Zylinder einer durch ein Druckmittel zu betätigenden Hebe- oder Verstellvorrichtung, ist aus der DE 952 575 B bekannt. Dabei ist es vorgesehen, dass beim Erreichen einer bestimmten Stellung des einen vom Druckmittel beaufschlagten Gliedes, z. B. des Schiebekolbens, relativ zum anderen Glied, z. B. dem Zylinder, das eine Glied durch einen an diesem angeordneten Vorsprung und mit einem der beiden Glieder in Verbindung stehende, durch ein Steuerglied betätigte Sperrelemente verriegelbar ist.

Auch hier ist von Nachteil, dass in die Sperrelemente in verriegeltem Zustand ein Biegemoment eingeleitet wird, welches nur durch eine entsprechende Dimensionierung der Sperrelemente in einem die Funktionsweise der Verriegelungsvorrichtung gewährleistenden Umfang abstützbar ist.

Aus der US 5,540,138 ist eine Verriegelungsvorrichtung bekannt, bei welcher ein mit einer Kolbenstange ausgeführter Kolben gegenüber einem den Kolben aufnehmenden Zylinder über mehrere am Umfang des Kolbens verteilt angeordnete federelastisch ausgeführte Verriegelungselemente arretierbar ist.

Die Verriegelungselemente sind einenends gehäusefest ausgeführt bzw. zylinderseitig festgelegt und anderenends in Bezug auf einen äußeren Durchmesser des Kolbens um die gehäuseseitig festgelegte Lagerstelle verschwenkbar ausgeführt. Dabei sind die freien Enden der Verriegelungselemente auf ihren dem Kolben zugewandten Seiten mit Vorsprüngen ausgeführt, welche in verriegelnder Stellung mit einem ringförmigen Absatz des Kolbens in Eingriff stehen.

Die vorbeschriebenen Ausgestaltungen der Verriegelungselemente und des Kolbens führen in verriegeltem Zustand des Kolbens ebenfalls dazu, dass an den Verriegelungselementen ein Biegemoment anliegt, welches die Verriegelungselemente zwischen der Lagerstelle und den Vorsprüngen unter Umständen in einem die Funktionsweise der Verriegelungsvorrichtung erheblich beeinträchtigenden Umfang verformt, wenn die Verriegelungselemente nicht eine bestimmte Biegesteifigkeit aufweisen. Eine solche Biegesteifigkeit wird jedoch nur mit Verriegelungselementen erreicht, die große Bauteilabmessungen aufweisen und daher durch einen hohen Bauraumbedarf gekennzeichnet sind.

Der vorliegenden Erfindung liegt daher die Aufgabe zugrunde, eine Verriegelungsvorrichtung zur Verfügung zu stellen, die einen geringen Bauraumbedarf aufweist und kostengünstig herstellbar ist.

Erfindungsgemäß wird diese Aufgabe mit einer Verriegelungsvorrichtung gemäß den Merkmalen des Patentanspruches 1 gelöst.

Die erfindungsgemäße Verriegelungsvorrichtung, insbesondere einer Parksperreneinrichtung eines mit einem Automatgetriebe ausgeführten Antriebsstranges eines Fahrzeuges, weist eine in axialer Richtung in einem Gehäuse verschiebbar angeordnete und in einer vordefinierten axialen Position arretierbare Kolbeneinheit sowie eine in der der arretierten Position der Kolbeneinheit selbsttätig aktivierende Rasteinrichtung zum Halten der Kolbeneinheit auf. Die Rasteinrichtung ist mit wenigstens einem mit der Kolbeneinheit in der arretierten Position der Kolbeneinheit in Wirkverbindung stehenden Federarm ausgeführt, an dem die Kolbeneinheit in der arretierten Position mit einem Rastbereich anliegt.

Erfindungsgemäß ist der Federarm mit einer in einer Längsebene angeordneten Aussparung ausgebildet und die Kolbeneinheit durchgreift die Aussparung des Federarms mit einem den Rastbereich ausbildenden Abschnitt in radialer Richtung wenigstens annähernd, so dass der Rastbereich der Kolbeneinheit in arretierter Position der Kolbeneinheit zumindest in einem der Längsebene des Federarms nahen Bereich, vorzugsweise in der Längsebene des Federarms, angeordnet ist.

Dadurch wird vorteilhafterweise erreicht, dass eine in verriegeltem Zustand der Verriegelungsvorrichtung an der Kolbeneinheit angreifende Haltekraft mit geringem Hebelarm oder direkt in den Federarm eingeleitet wird, wodurch dem Federarm von der anliegenden Belastung im Wesentlichen nur ein geringes oder überhaupt kein Biegemoment aufgeprägt wird.

Dies führt vorteilhafterweise dazu, dass der Federarm aufgrund der im Vergleich zu aus dem Stand der Technik bekannten Verriegelungsvorrichtungen niedrigeren Belastungen mit geringeren Bauteilabmessungen und geringerem Materialeinsatz ausführbar ist und somit wesentlich kostengünstiger herstellbar ist sowie durch einen verringerten Bauraumbedarf gekennzeichnet ist.

Weitere Vorteile ergeben sich aus den Unteransprüchen.

Bei einer vorteilhaften Weiterbildung der erfindungsgemäßen Verriegelungsvorrichtung ist eine Anlagefläche des Federarms für den Rastbereich der Kolbeneinheit als eine eine Aussparung in der Längsebene des Federarms begrenzende Seitenfläche ausgeführt, welche vorzugsweise durch Ausstanzen hergestellt ist.

Bei einer Weiterbildung der erfindungsgemäßen Verriegelungsvorrichtung ist die Aussparung durch bereichsweises Ausstanzen und anschließendes Umbiegen des ausgestanzten Bereiches gegenüber der Längsebene des Federarms hergestellt, wobei die Kolbeneinheit in arretiertem Zustand an dem aus der Längsebene des Federarms herausgebogenen Bereich anliegt und den gebogenen Bereich in seiner Fertigungsbiegerichtung aus der Längsebene heraus belastet. Bei der letztgenannten Ausführungsform wird die an der Kolbeneinheit angreifende Haltekraft mit einem in Abhängigkeit des Biegeradius des gebogenen Bereichs gegenüber der Längsebene des Federarms stehenden Hebelarms in den Federarm eingeleitet, wobei der Hebelarm wesentlich kleiner als bei aus dem Stand der Technik bekannten Verriegelungsvorrichtungen ist.

Zur Reduzierung einer Kerbwirkung im Krafteinleitungsbereich der Haltekraft in den Federarm ist ein Stanzradius im Bereich der Anlagefläche des Rastbereiches der Kolbeneinheit an dem Federarm entsprechend ausgewählt.

Bei einer vorteilhaften Weiterbildung der erfindungsgemäßen Verriegelungsvorrichtung ist der Federarm zur Erhöhung der Biegesteifigkeit wenigstens abschnittsweise im Querschnitt U-förmig ausgebildet, wobei diese Querschnittsgestaltung kostengünstig und auf einfache Art und Weise während eines Biegestanzprozesses herstellbar ist. So wird der Federarm vorzugsweise in seinem Längsträgerbereich mit radial und tangential gerichteten Umbiegungen ausgestaltet, die dem Federarm seinen im Wesentlichen U-förmigen Querschnitt verleihen.

Des Weiteren besteht die Möglichkeit, den Federarm alternativ zu oder in Kombination mit der letztgenannten Ausführungsform des Federarms wenigstens bereichsweise mit mindestens einer im Wesentlichen in Längsrichtung des Federarms verlaufenden Versteifungssicke auszubilden, um den Federarm im Angriffsbereich des Löseelements mit der für das Lösen der Wirkverbindung zwischen dem Federarm und der Kolbeneinrichtung vorteilhaften Biegesteifigkeit ausführen zu können.

Alternativ oder in Kombination zu den beiden vorgenannten, die Biegefestigkeit des Federarms erhöhenden Maßnahmen, kann der Federarm bei einer weiteren vorteilhaften Ausgestaltung der erfindungsgemäßen Verriegelungsvorrichtung wenigstens bereichsweise mit mindestens einem im Wesentlichen in Längsrichtung des Federarms verlaufenden Versteifungsknick ausgeführt sein, dass der Federarm bereichsweise mit der das Lösen der Wirkverbindung zwischen dem Federarm und der Kolbeneinrichtung begünstigenden Biegesteifigkeit ausgeführt ist.

Bei einer vorteilhaften Weiterbildung der Verriegelungsvorrichtung nach der Erfindung liegt zwischen der in montiertem Zustand des Federarms mit dem Rastbereich der Kolbeneinheit in Überdeckung bringbaren Anlagefläche und dem Rastbereich der Kolbeneinheit wenigstens Linienberührung, vorzugsweise eine flächige Anlage, vor. Damit ist die Flächenpressung zwischen dem Federarm und der Kolbeneinheit im Überdeckungsbereich zwischen der Anlagefläche und dem Rastbereich im Vergleich zu einer punktförmigen Auflage in einem derartigen Umfang reduziert, dass für die Herstellung der Kolbeneinheit kostengünstige und durch ein geringes Gewicht gekennzeichnete Materialien, wie Aluminium basierte Materialien, verwendet werden können.

Der Effekt der Reduzierung der Flächenpressung bei aktivierter Rasteinrichtung wird bei einer vorteilhaften Weiterbildung der erfindungsgemäßen Verriegelungsvorrichtung dadurch verstärkt, dass der Federarm im Bereich seiner Anlagefläche mit einer derartig an die äußere Form der Kolbeneinheit angepassten Kontur ausgeführt ist, dass eine Fläche des Überdeckungsgrads zwischen dem Rastbereich der Kolbeneinheit und der Anlagefläche des Federarms maximal ist.

Bei einer weiteren günstigen Ausführungsform des Gegenstandes nach der Erfindung sind die Anlagenfläche des Federarms und der Rastbereich der Kolbeneinheit im Überdeckungsbereich jeweils derart ausgeführt, dass sich eine senkrecht zur Bewegungsrichtung der Kolbeneinheit stehende Ebene und eine Berührungsebene des Überdeckungsbereichs zwischen dem Rastbereich und der Anlagenfläche in einem Winkel von 0° bis 50 schneiden. Dieser Winkel entspricht einem so genannten Selbsthemmungswinkel, welcher zum sicheren Ver- und Entriegeln bzw. zum sicheren Aktivieren bzw. Deaktivieren der Rasteinrichtung eingehalten werden muss und dessen Größe jeweils in Abhängigkeit des im Überdeckungsbereich zwischen dem Federarm und der Kolbeneinheit vorliegenden Reibungskoeffizienten variiert. Der Reibungskoeffizient ergibt sich aus der ausgewählten Materialpaarung zwischen der Kolbeneinheit und dem Federarm, wobei ein die Funktionsweise der erfindungsgemäßen Vorrichtung gewährleistender Selbsthemmungswinkel bei einer Materialpaarung Stahl/Stahl bei etwa 5° liegt.

Dabei wird vorliegend unter der Berührungsebene des Überdeckungsbereichs diejenige Ebene verstanden, welche durch die dem Rastbereich zugewandte Anlagefläche aufgespannt wird, wenn die Anlagefläche an dem Rastbereich anliegt.

In diesem Zusammenhang wird darauf hingewiesen, dass sich der Schnittwinkel zwischen der senkrechten Ebene und der Berührungsebene des Überdeckungsbereichs unter Betriebsbelastung in einem Umfang verändern kann, der von dem vorgenannten Bereich abweicht, ohne die Funktionsweise der Verriegelungsvorrichtung nach der Erfindung in unerwünschtem Umfang zu beeinträchtigen. Der maximal zulässige Veränderungsbereich des Winkels zwischen der senkrechten Ebene und der Berührungsebene steht ebenfalls in Abhängigkeit des Reibungskoeffizienten zwischen dem Federarm und der Kolbeneinheit, so dass dieser in Abhängigkeit des jeweils vorliegenden Anwendungsfalles variiert.

Um eine aufzuwendende Kraft zum Deaktivieren der Rasteinrichtung gering zu haften und einem Klemmen der Verriegelungsvorrichtung im Bereich zwischen dem Federarm und dem Löseelement entgegenzuwirken, ist der Federarm an einer dem Löseelement zugewandten Stirnseite mit einem Führungsbereich ausgebildet, über die der Federarm bei einer axialen Verstellung des Löseelements entgegen der Federkraftvorspannung des Federarms geführt und dabei aus seiner dem geschlossenen Zustand der Verriegelungsvorrichtung äquivalenten Position in seine dem geöffneten Zustand der Verriegelungsvorrichtung äquivalente Position verschwenkt wird.

Zur weiteren Verringerung der Betätigungskraft der Rasteinrichtung sowie zur Verbesserung des Klemmschutzes der Vorrichtung im Bereich zwischen dem Federarm und der Kolbeneinheit ist das Löseelement bei einer Weiterbildung des Gegenstandes der Erfindung an einer dem Federarm zugewandten Stirnseite mit einer Führungsfläche ausgebildet, über die der Federarm bei einer axialen Verstellung des Löseelements entgegen der Federkraft des Federarms geführt und dabei aus seiner dem geschlossenen Zustand der Verriegelungsvorrichtung äquivalenten Position in seine dem geöffneten Zustand der Verriegelungsvorrichtung äquivalente Position verschwenkt wird.

Bei einer weiteren vorteilhaften Ausführungsform der Verriegelungsvorrichtung wirken der Führungsbereich des Federarms und die Führungsfläche des Löseelements derart miteinander zusammen, dass der Federarm bei einer axialen Verstellung des Löseelements entgegen der Federkraftvorspannung des Federarms mit seinem Führungsbereich über die Führungsfläche des Löseelements geführt und dabei aus seiner dem geschlossen Zustand der Verriegelungsvorrichtung äquivalenten Position in seine dem geöffneten Zustand der Verriegelungsvorrichtung äquivalente Position verschwenkt wird.

Vorteilhafte Weiterbildungen des Gegenstandes nach der Erfindung ergeben sich aus den unter Bezugnahme auf die Zeichnung prinzipmäßig beschriebenen Ausführungsbeispielen, wobei in der Beschreibung der verschiedenen Ausführungsbeispiele der Übersichtlichkeit halber für bau- und funktionsgleiche Bauteile dieselben Bezugszeichen verwendet werden.
Es zeigt:
- Fig. 1: eine schematisierte Längsschnittansicht durch eine erfindungsgemäße Verriegelungsvorrichtung;
- Fig. 2: eine stark schematisierte Einzelansicht der Kolbeneinheit und eines Federarms der Verriegelungsvorrichtung gemäß Fig. 1 in einer Längsschnittansicht;
- Fig. 2a: eine Fig. 2 entsprechende Darstellung der Kolbeneinheit und des Federarms;
- Fig. 2b: den in Fig. 2 dargestellten Federarm in einer Draufsicht in Alleinstellung;
- Fig. 3a: eine Fig. 2 entsprechende Darstellung einer zweiten Ausführungsform der erfindungsgemäßen Vorrichtung gemäß Fig. 1;
- Fig. 3b: die in Fig. 3a dargestellte Kolbeneinheit und den Federarm in einer Seitenansicht;
- Fig. 4a: eine Fig. 3a entsprechende Darstellung einer weiteren Ausführungsform der erfindungsgemäßen Vorrichtung gemäß Fig. 1;
- Fig. 4b: eine Fig. 3a entsprechende Darstellung der Kolbeneinheit und des Federarms gemäß Fig. 4a;
- Fig. 5: zwei verschiedene Ausführungsformen der Kolbeneinheit und jeweils eines damit zusammenwirkenden Federarms, wobei der Rastbereich wenigstens bereichsweise konisch ausgeführt ist;
- Fig. 6a: eine Draufsicht auf einen Federarm der in Fig. 1 dargestellten Verriegelungsvorrichtung;
- Fig. 6b: eine Querschnittsansicht des Federarms gemäß Fig. 6a entlang einer Linie VIb-VIb;
- Fig. 7a: eine zu der in Fig. 6a alternative Ausführungsform des Federarms der Verriegelungsvorrichtung gemäß Fig. 1;
- Fig. 7b: eine Querschnittsansicht des Federarms gemäß Fig. 7a entlang der Linie VIIb-VIIb;
- Fig. 8a: eine Draufsicht einer weiteren Ausführungsform eines Federarms der Verriegelungsvorrichtung gemäß Fig. 1;
- Fig. 8b: den Federarm gemäß Fig. 8a in einer Querschnittsansicht gemäß der Linie VIIIb-VIIIb;
- Fig. 9a: ein weiteres Ausführungsbeispiel des Federarms der Verriegelungsvorrichtung gemäß Fig. 1 in Alleindarstellung in einer Draufsicht;
- Fig. 9b: eine Querschnittsansicht des Federarms gemäß Fig. 9a entlang der Linie IXb-IXb;
- Fig. 10: eine Längsschnittansicht des in Fig. 7a dargestellten Federarms entlang der Linie X-X;
- Fig. 11: eine mit dem in Fig. 10 dargestellten Federarm korrespondierende Biegelinie, welche die Funktionsweise der Verriegelungsvorrichtung gewährleistet;
- Fig.12: eine nicht beanspruchte Ausführungsform eines mit im Wesentlichen über die gesamte Länge mit gleicher Biegesteifigkeit ausgeführten Federarm und
- Fig. 13: eine mit dem in Fig. 12 dargestellten Federarm korrespondierende Biegelinie, welche die Funktionsweise der Vorrichtung in unerwünschtem Umfang beeinträchtigt.

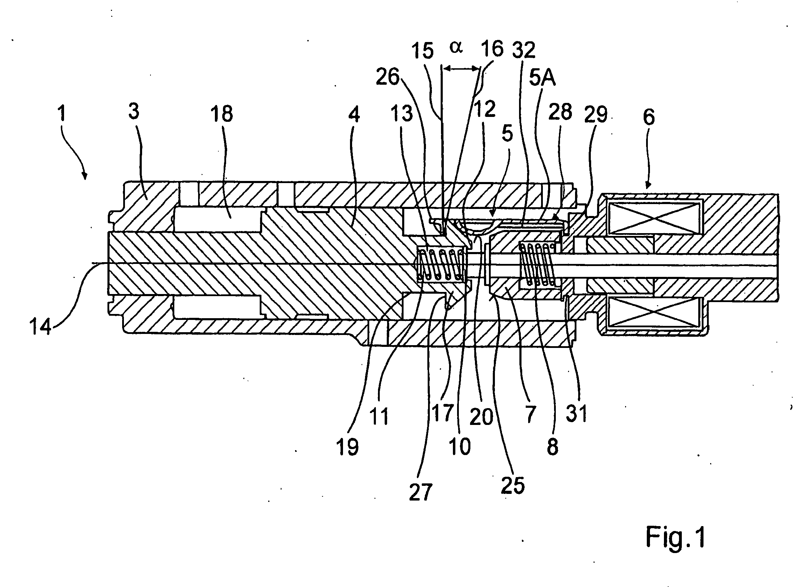

Eine schematisierte Längsschnittansicht einer Verriegelungsvorrichtung 1 einer an sich bekannten Parksperreneinrichtung eines mit einem Automatgetriebe ausgeführten Antriebsstranges eines Kraftfahrzeuges, ist in Fig. 1 gezeigt. Die Verriegelungsvorrichtung 1 weist in an sich bekannter Art und Weise eine mit einem Fluid beaufschlagbare und in Abhängigkeit des Fluiddrucks entgegen einer in Schließrichtung der Parksperreneinrichtung wirkenden nicht näher dargestellten Federeinrichtung in Öffnungsrichtung der Parksperreneinrichtung betätigbare und in axialer Richtung in einem Gehäuse 3 verschiebbar angeordnete Kolbeneinheit 4 auf.

Die Kolbeneinheit 4 ist in montiertem Zustand in nicht näher dargestellter Art und Weise mit einer Parkstange der Parksperreneinrichtung verbunden, wobei die Parkstange wiederum derart mit einer Parksperrenklinke wirkverbunden ist, dass die Parksperrenklinke aufgrund einer axialen Bewegung der Kolbeneinheit und der damit verbundenen Parkstange mit einem mit dem Abtrieb des Antriebsstranges drehfest verbundenen Parksperrenrad in Eingriff bringbar ist oder aus dem Eingriff mit dem Parksperrenrad führbar ist.

Des Weiteren ist die Verriegelungsvorrichtung 1 mit einer in einer vordefinierten Position der Kolbeneinheit 4 selbsttätig aktivierenden Rasteinrichtung 5 zum Halten der Kolbeneinheit 4 in der vordefinierten Position ausgebildet. Zusätzlich ist die Verriegelungsvorrichtung 1 mit einer elektromagnetischen Betätigungseinrichtung 6 zum Betätigen eines Löseelements 7 ausgeführt, dass zum Deaktivieren der Rasteinrichtung 5 vorgesehen ist und mit einer Kolbenstange 8 verbunden und gemeinsam mit der Kolbenstange 8 längsbeweglich im Inneren des Gehäuses 3 angeordnet ist.

Die Kolbenstange 8 ist an ihrem der Kolbeneinheit 4 zugewandten Ende mit der Kolbeneinheit 4 über einen Federring 10 verbunden, wobei der Federring 10 in axialer Richtung über ein Federelement 11 gegen einen Innenanschlag 12 der Kolbeneinheit 4 gedrückt ist. Das bedeutet, dass zwischen der Kolbenstange 8 und der Kolbeneinheit 4 eine Relativbewegung innerhalb konstruktiv vorgegebener Grenzen gegen die Federkraft des Federelementes 11 möglich ist, da die Kolbenstange 8 mit ihrem der Kolbeneinheit 4 zugewandten Ende in eine Bohrung 13 der Kolbeneinheit 4, in der auch das Federelement 11 angeordnet ist, eintaucht.

Des Weiteren steht die Kolbeneinheit 4 an ihrem der Kolbenstange 8 abgewandten Ende mit der nicht näher dargestellten Parksperreneinrichtung und mit einer ebenfalls nicht näher dargestellten Notentriegelungseinrichtung derart in Wirkverbindung, dass die Kolbeneinheit 4 über die Notentriegelungseinrichtung aus der dem geschlossenen Zustand der Parksperreneinrichtung äquivalenten axialen Position in die dem geöffneten Zustand der Parksperreneinrichtung äquivalente axiale Position verschiebbar ist.

Darüber hinaus steht die Kolbenstange 8 an ihrem der Kolbeneinheit 4 abgewandten Ende in an sich bekannter Art und Weise mit der Notverriegelungseinrichtung in Wirkverbindung, mittels der die Kolbenstange 8 und das damit verbundene Löseelement 7 von einer Bedienperson bzw. einem Fahrer des Fahrzeugs manuell in Richtung der Kolbeneinheit 4 verschiebbar ist, um die Parksperreneinrichtung bedarfsweise einlegen zu können.

Die in Fig. 1 dargestellte Verriegelungsvorrichtung 1 weist im normalen Betriebmodus, während dem die Kolbeneinheit 4 mit einem Fluiddruck beaufschlagbar ist und die elektromagnetische Betätigungseinrichtung bestrombar ist, folgende Funktionsweise auf:

Ausgehend von einem in Fig. 1 dargestellten Betriebszustand, bei dem das Löseelement 7 mit seinem der elektromagnetischen Betätigungseinrichtung 6 zugewandten Ende an dieser anliegt und ein wenigstens annähernd konisch ausgebildeter Bereich 17 der Kolbeneinheit 4 von der Rasteinrichtung 5 umfasst ist, befindet sich die Kolbeneinheit 4 in einer einem geöffneten Zustand der Parksperreneinrichtung äquivalenten axialen Position.

Die Rasteinrichtung 5 ist in dem in Fig. 1 dargestellten Zustand der Verriegelungsvorrichtung 1 aktiviert, so dass die Kolbeneinheit 4 durch Federarme 5A, von welchen in Fig. 1 lediglich einer von vorzugsweise drei gleichmäßig über den Umfang der Kolbeneinheit 4 verteilt angeordneten Federarmen dargestellt sind, derart gehalten, dass ein selbsttätiges Einlegen der Parksperrenklinke auch bei nicht anliegendem Fluiddruck im Ringraum 18 sicher vermieden ist.

Soll die Parksperreneinrichtung aufgrund einer Fahrerwunschvorgabe, die vorzugsweise über eine Fahrstufenwähleinrichtung ergeht, eingelegt werden, wird die elektromagnetische Betätigungseinrichtung 6 derart bestromt, dass das Löseelement 7 zusammen mit der Kolbenstange 8 in Richtung der Kolbeneinheit 4 ausgehend von der in Fig. 1 dargestellten Position zwischen die Federarme 5A der Rasteinrichtung 5 geschoben wird. Dabei kommt das Löseelement 7 mit zunehmendem Verstellweg mit seinem der Kolbeneinheit 4 zugewandten Ende, welches mit einer kegelförmig bzw. konisch ausgeführten Führungsfläche 25 ausgeführt ist, mit einem mit der Führungsfläche 25 des Löseelements 7 korrespondierenden und wenigstens annähernd zylindrisch ausgebildeten Führungsbereich 20 der Federarme 5A derart in Eingriff, dass die Federarme 5A von dem Löseelement 7 entgegen einer bauteileigenen und radial nach innen gerichteten Federkraftvorspannung der Federarme 5A immer weiter nach außen gedrückt werden, bis der Kraftschluss zwischen der Rasteinrichtung 5 und der Kolbeneinheit 4 zwischen einer Anlagefläche 26 der Federarme 5A und einem Rastbereich 27 der Kolbeneinheit 4, der sich an einen reduzierten Durchmesserbereich 19 anschließt, aufgehoben ist.

Greift an der Kolbeneinheit 4 eine in Schließrichtung der Parksperreneinrichtung wirkende resultierende Kraftkomponente an, die sich jeweils aus der Federkraft der an der Kolbeneinheit 4 angreifenden Federeinrichtung und dem aktuell in dem Ringraum 18 anliegenden Fluiddruck zusammensetzt, wird die Kolbeneinheit 4 von der elektromagnetischen Betätigungseinrichtung 6 weg verschoben, bis die Parksperreneinrichtung eingelegt ist. Bei eingelegter Parksperreneinrichtung ist die Kolbeneinheit 4 aus dem Eingriffsbereich der Federarme 5A verschoben, so dass die Rasteinrichtung 5 deaktiviert ist. Anschließend wird die Bestromung der elektromagnetischen Betätigungseinrichtung 6 abgeschaltet, wodurch das Löseelement 7 aufgrund der Federkraft des Federelementes 11 wieder gegen den radialen Bereich 16 der Rasteinrichtung 5 in der in Fig. 1 dargestellten Art und Weise gedrückt wird. Da die Federarme 5A mit einer in Richtung der Mittelachse 14 der Vorrichtung 1 wirkenden Federkraftvorspannung ausgeführt sind, klappen die Federarme 5A in radialer Richtung um einen Gelenkbereich 28 nach innen.

Wird der Ringraum 18 bei dem letztgenannten Zustand der Vorrichtung 1 wiederum mit einem derartigen Fluiddruck beaufschlagt, dass die an der Kolbeneinheit 4 angreifende resultierende Kraftkomponente in Richtung des Löseelementes 7 wirkt, wird die Kolbeneinheit 4 von ihrer dem geschlossenen Zustand der Parksperreneinrichtung äquivalenten axialen Position in Richtung der elektromagnetischen Betätigungseinrichtung 6 verschoben, bis die Rasteinrichtung 5 in der nachbeschriebenen Art und Weise aktiviert ist.

Die Kolbeneinheit 4 wird aufgrund des in dem von dem Gehäuse 3 und der Kolbeneinheit 4 begrenzten Ringraum 18 vorherrschenden Fluiddruckes, der hydraulisch oder pneumatisch erzeugt sein kann, aus ihrer dem geschlossenen Zustand der Parksperreneinrichtung äquivalenten axialen Position in Richtung der elektromagnetischen Betätigungseinrichtung 6 in axialer Richtung verstellt. Während der axialen Verstellung der Kolbeneinheit 4 werden die in Richtung der Mittelachse 14 der Vorrichtung 1 eingeklappten Federarme 5A der Rasteinrichtung 5 jeweils ausgehend von ihrem der Kolbeneinheit 4 zugewandten Enden mit zunehmendem Verstellweg der Kolbeneinheit 4 über den an dem der Betätigungseinrichtung 6 zugewandten Ende der Kolbeneinheit 4 kegelig bzw. konisch ausgeführten Bereich 17 der Kolbeneinheit 4 geführt.

Aufgrund der in Richtung der Kolbeneinheit 4 wirkenden Federkraftvorspannung der Federarme 5A kommen die Federarme 5A nach Überfahren des konischen Bereichs 17 an der Kolbeneinheit 4 in einem verringerten Durchmesserbereich 19 der Kolbeneinheit 4 mit ihrer der Kolbeneinheit 4 zugewandten Anlagefläche 26 hinter dem konischen Bereich 17 am Rastbereich 27 zum Anliegen. Da sowohl die Federarme 5A mit ihren Anlageflächen 26 als auch die Kolbeneinheit 4 mit ihrem Rastbereich 27 jeweils miteinander zugewandten Absätzen ausgeführt sind und bei aktivierter Rasteinrichtung 5 als Anlagebereiche zwischen den Federarmen 5A sowie der Kolbeneinheit 4 vorgesehen sind, wird die Kolbeneinheit 4 trotz einer an ihr angreifenden resultierenden Kraftkomponente, die in Schließrichtung des Verriegelungsmechanismus wirkt, von der Rasteinrichtung 5 in der in Fig. 1 dargestellten Position aufgrund der im Bereich der Absätze vorliegenden kraftschlüssigen Verbindung zwischen den Federarmen 5A und der Kolbeneinheit 4 gehalten.

Die in Schließrichtung der Parksperreneinrichtung wirkende resultierende Kraftkomponente greift dann an der Kolbeneinheit 4 an, wenn die Federkraft der Federeinrichtung größer als die auf die Kolbeneinheit 4 wirkende hydraulische oder pneumatisch Druckkraft des Ringraums 18 ist.

Des Weiteren ist die in Fig. 1 dargestellte Verriegelungsvorrichtung 1 derart ausgeführt, dass die Verriegelungsvorrichtung bei einem Systemausfall des zur vorbeschriebenen Betriebsweise erforderlichen Steuersystems, bei dem weder ein Fluiddruck im Ringraum 18 zur Betätigung der Kolbeneinheit 4 bereitsteht noch eine Bestromung der elektromagnetischen Betätigungseinrichtung 6 möglich ist, in ihrem zuletzt eingenommenen Zustand, d. h. geöffnet oder geschlossen, verbleibt. Damit die Parksperreneinrichtung dennoch weiterhin angesteuert werden kann, sind die Notentriegelungseinrichtung und die Notverriegelungseinrichtung vorgesehen, die einem Fahrer die Möglichkeit bieten, die aktuell eingelegte Parksperreneinrichtung manuell zu entriegeln oder die aktuell ausgelegte Parksperreneinrichtung manuell einlegen zu können.

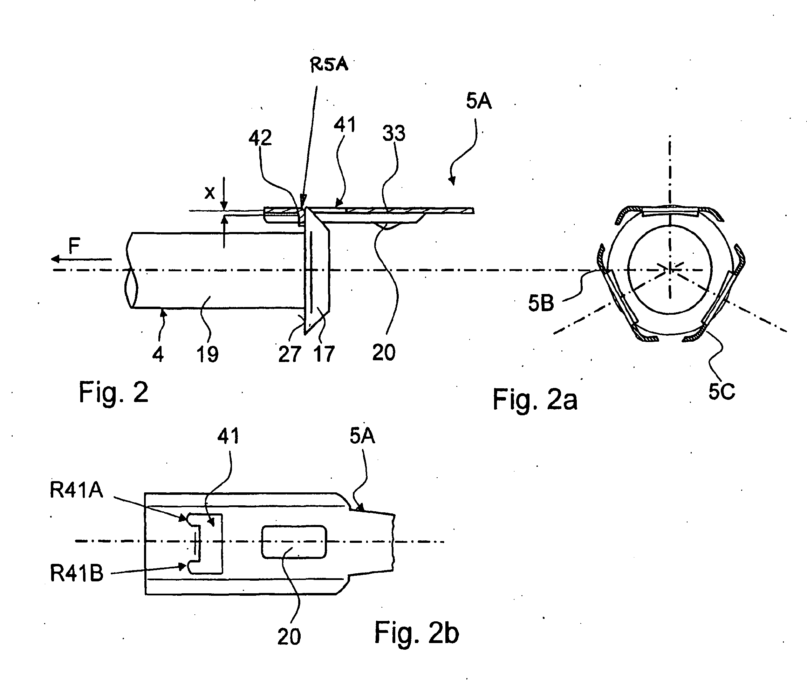

In Fig. 2 bis Fig. 5 sind fünf verschiedene Ausführungsformen der erfindungsgemäßen Verriegelungsvorrichtung gemäß Fig. 1 dargestellt, wobei sowohl die Kolbeneinheit 4 als auch der Federarm 5A bereichsweise in der nachbeschriebenen Art und Weise unterschiedlich ausgeführt sind, um die vorbeschriebene Funktionsweise der Verriegelungsvorrichtung 1 sicher gewährleisten zu können.

Die in Fig. 2 bis Fig. 5 dargestellten verschiedenen Ausführungen des Federarms 5A und der Kolbeneinheit 4 unterscheiden sich im Wesentlichen im Bereich der Anlagefläche 26 sowie im Rastbereich 27 der Kolbeneinheit 4, so dass in der Beschreibung der zweiten, dritten, vierten und fünften Ausführungsform der erfindungsgemäßen Verriegelungsvorrichtung 1 lediglich auf die Unterschiede zu der in Fig. 2 bis Fig. 2b dargestellten ersten Ausführungsform des Federarms 5A und der Kolbeneinheit 4 näher eingegangen wird.

Weiter Bezug nehmend auf Fig. 2, in der der Federarm 5A und die Kolbeneinheit 4 in Alleinstellung in einer Längsschnittansicht gezeigt sind, wird die erfindungsgemäße Gestaltung des Federarms 5A in Verbindung mit der Darstellung von Fig. 2a, welche eine Seitenansicht der Kolbeneinheit 4 und drei damit in Wirkverbindung stehenden Federarmen 5A bis 5C zeigt, sowie in Verbindung mit der Darstellung von Fig. 2b, welche eine Draufsicht auf den Federarm 5A gemäß Fig. 2a und Fig. 2b zeigt, näher erläutert.

Der in Fig. 2 dargestellte Federarm 5A weist einen Längsträgerbereich 33 auf, der im Wesentlichen eine Längsebene des Federarms 5A ausbildet. Aus dem Längsträgerbereich 33 ist eine Aussparung 41 ausgestanzt, wobei zumindest ein Teil des ausgestanzten Bereiches in Form einer Lasche 42 um wenigstens 90° gegenüber dem Längsträgerbereich 33 bzw. der Längsebene des Federarms 5 in Richtung der Kolbeneinheit 4 umgebogen ist. Die Kolbeneinheit 4 liegt mit ihrem Rastbereich 27 an der von der Lasche 42 ausgebildeten Anlagefläche 26 bündig an dem Federarm 5A an und wird entgegen einer durch den Pfeil F gekennzeichneten Haltekraft in der in Fig. 2 dargestellten Position gehalten.

Der konische Bereich 17 der Kolbeneinheit 4 ist vorliegend in seinem größten Durchmesserbereich mit einem derartigen Durchmesser ausgeführt, dass die Kolbeneinheit 4 mit ihrem konischen Bereich 17 die Aussparung 41 des Federarms 5A in radialer Richtung wenigstens annähernd durchgreift. Damit wird erreicht, dass der Rastbereich 27 der Kolbeneinheit 4 in arretiertem Zustand der Kolbeneinheit 4 zumindest in einem der Längsebene des Federarms 5A nahen Bereich angeordnet ist und die Haltekraft mit einem Hebelarm x, der nur einen geringen Abstandswert gegenüber der Längsebene des Federarms 5A darstellt, in den Federarm 5A eingeleitet wird. Dadurch wird dem Federarm 5A durch die anliegende Haltekraft nur ein geringes Biegemoment aufgeprägt.

Gleichzeitig wird der Federarm 5A im Bereich der Lasche 42, d. h. auch in seinem eine Sollbruchstelle darstellenden gekrümmten Bereich, in die während der Herstellung des Federarms 5A vorgesehenen Biegerichtung durch die Haltekraft F beansprucht. Der Federarm 5A weist im Biegebereich der Lasche 42 somit auf einfache Art und Weise eine längere Standzeit auf, da die Lasche 42 nicht entgegen der Biegeeinrichtung beim Biegeumformen und den im Biegebereich vorliegenden Fertigungseigenspannungen mit der Haltekraft beaufschlagt wird.

Der Hebelarm x resultiert bei der in Fig. 1 und Fig. 2 dargestellten Ausführungsform des Federarms 5A aus dem dem konischen Bereich der Kolbeneinheit 4 zugewandten Biegeradius R5A des Biegebereichs der Lasche 42, da eine Linienberührung bzw. eine flächige Anlage zwischen dem Federarm 5A und dem Rastbereich 27 der Kolbeneinheit 4 erst nach dem Übergang vom Biegeradius R5A in die ebene Anlagefläche 26 vorliegt.

Um die flächige Anlage bzw. die Linienberührung zwischen dem Federarm 5A und der Kolbeneinheit 4 direkt in die Längsebene des Federarms 5A zu verlegen, ist eine Nachbearbeitung des Federarms 5A erforderlich, die den Biegeradius im Bereich der Längsebene eliminiert. Dies ist beispielsweise durch Fräsen, Schleifen oder ähnliche Fertigungsverfahren erreichbar, wobei dadurch jedoch die Fertigungskosten des Federarms 5A erhöht werden.

Aus der Darstellung gemäß Fig. 2a geht hervor, dass die Kolbeneinheit 4 neben dem in Fig. 2 dargestellten Federarm 5A von zwei weiteren identisch ausgeführten Federarmen 5B und 5C, die gleichmäßig über den Umfang der Kolbeneinheit 4 verteilt angeordnet sind, gehalten ist. Zusätzlich geht aus der Darstellung gemäß Fig. 2a hervor, dass die Laschen 42 der Federarme 5A bis 5C im Bereich ihrer der Kolbeneinheit 4 zugewandten freien Enden mit kreissegmentartigen Ausnehmungen ausgeführt sind, so dass die Federarme 5A, 5B und 5C in der für die Arretierung der Kolbeneinheit 4 erforderlichen Art und Weise in Richtung des verringerten Durchmesserbereiches 19 der Kolbeneinheit 4 einfedern können, ohne an diesem zum Anliegen zu kommen, bevor der Rastbereich 27 im Wesentlichen in der Längsebene der Federarme 5A bis 5C angeordnet ist und der Hebelarm x einen unerwünscht großen Wert annimmt.

Fig. 2b zeigt den Federarm 5A gemäß Fig. 2 und Fig. 2a in einer Draufsicht, in der die für eine Kerbwirkung vorteilhafte Ausgestaltung der Aussparung 41 im Bereich der Lasche 42 näher dargestellt ist. Dabei ist die Stanzkontur der Aussparung 41 im Bereich der Lasche 42 jeweils mit für eine geringe Kerbwirkung erforderlichen Stanzradien R41A, R41 B ausgeführt.

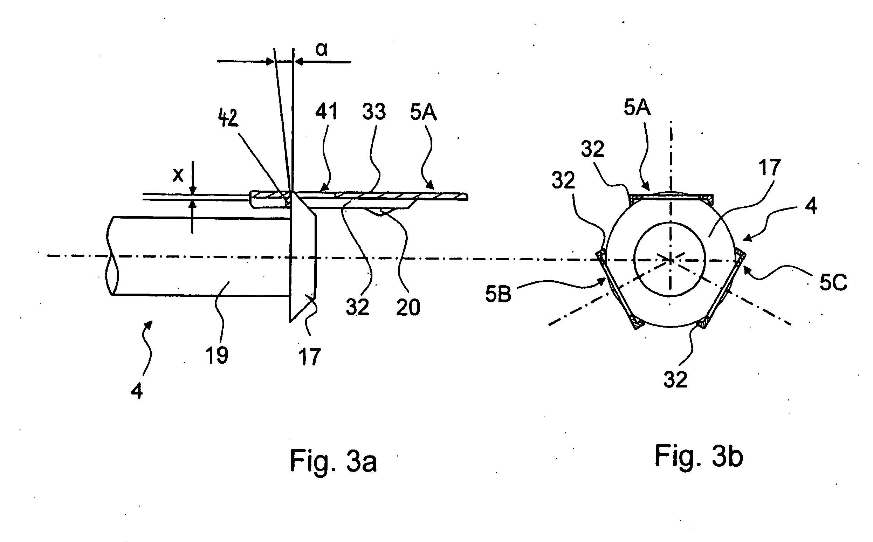

In Fig. 3 ist ein zweites Ausführungsbeispiel der erfindungsgemäßen Verriegelungsvorrichtung 1 gemäß Fig. 1 gezeigt.

Neben der Aussparung 41 sind die Federarme 5A bzw. 5B und 5C im Längsträgerbereich mit Umbiegungen 32 ausgeführt, um eine Biegesteifigkeit des Federarms 5A bzw. der Federarme 5B und 5C in Längsrichtung zu erhöhen, wobei die Umbiegungen 32 wahlweise rechtwinklig oder verrundet ausgeführt sein können, um einen möglichst sanften Übergang zum Längsträgerbereich 33 vorzusehen.

Zusätzlich ist es vorliegend vorgesehen, die Anlagefläche 26 in Bezug auf den Rastbereich 27, der im Wesentlichen senkrecht zur Längsachse der Kolbeneinheit 4 angeordnet ist, mit einem so genannten Selbsthemmungswinkel α, der im Bereich von 0° bis 5° vorgesehen sein kann, auszuführen. Mittels des Selbsthemmungswinkels α ist eine dem Lösen der Verriegelungsvorrichtung entgegenstehende Arretierungskraft in Abhängigkeit des jeweils vorliegenden Anwendungsfalles auf einfache Art und Weise variierbar. Dabei liegt zwischen der Anlagefläche 26 des Federarms 5A und dem Rastbereich 27 der Kolbeneinheit 4 bei einem Selbsthemmungswinkel von 0° im Wesentlichen eine die Arretierungskraft erhöhende flächige Anlage vor, während bei Selbsthemmungswinkeln größer als 0° zwischen der Kolbeneinheit 4 und dem Federarm 5A eine die Flächenpressung weiter erhöhende und die Arretierungskraft gleichzeitig reduzierende Linienberührung gegeben ist.

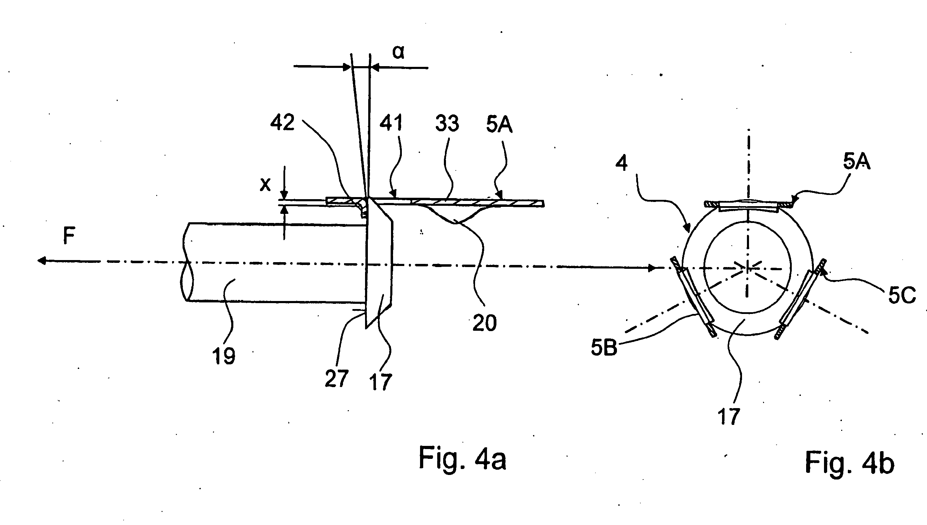

Fig. 4a und Fig. 4b zeigen ein drittes Ausführungsbeispiel der Verriegelungsvorrichtung 1 gemäß Fig. 1, welches im Wesentlichen dem zweiten Ausführungsbeispiel gemäß Fig. 2 bis Fig. 2b entspricht, wobei der Selbsthemmungswinkel α zur Reduzierung der der Lösekraft der Verriegelungsvorrichtung 1 entgegenstehenden Arretierungskraft im Bereich der Lasche 42 vorgesehen ist. Das bedeutet, dass die Lasche 42 auf der im Rastbereich 27 der Kolbeneinheit 4 abgewandten Seite einen Winkel zwischen 90° und 95° einschließt, um die Arretierungskraft zu reduzieren, wobei mit steigendem Selbsthemmungswinkel α der Wert des Hebelarms x ansteigt. Weiterhin hat der Federarm 5 keine Umbiegungen 32 im Längsträgerbereich 33. Dadurch werden zum einen Kosten gespart und zum anderen kann damit gezielt Einfluß auf die Biegelinie de Federarms 5 genommen werden.

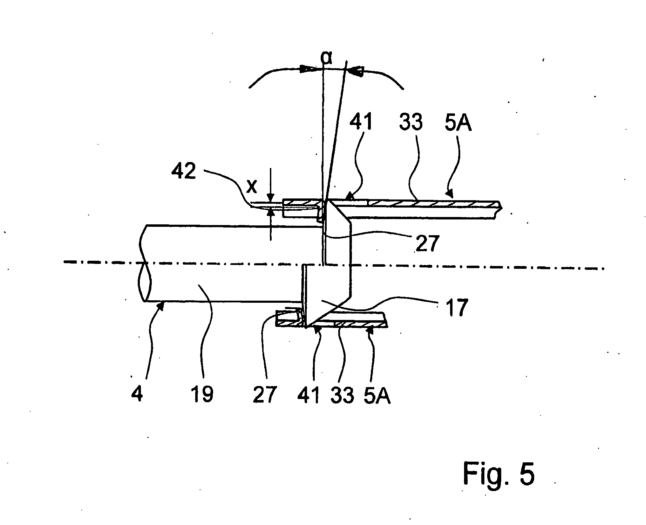

Darüber hinaus besteht jedoch auch die Möglichkeit, den Selbsthemmungswinkel α zur Reduzierung der Arretierungskraft sowohl durch entsprechende konstruktive Maßnahmen im Bereich der Anlagefläche 26 als auch im Rastbereich 27 der Kolbeneinheit 4 zu variieren. In derartigen Fällen ist der Rastbereich 27 in der in Fig. 5 dargestellten Art und Weise kegelförmig ausgeführt und schließt mit einer senkrecht zur Längsachse der Kolbeneinheit 4 stehenden Ebene einen spitzen Winkel zwischen 0° und 5° ein. Gleichzeitig ist die Lasche 42 gegenüber dem Längsträgerbereich 33 derart umgebogen, dass die Lasche 42 mit dem Längsträgerbereich 33 auf der dem Rastbereich 27 abgewandten Seite einen Winkel kleiner als 90°einschließt. Dabei ist es vorgesehen, dass der sich aus dem Umbiegungswinkel der Lasche 42 gegenüber dem Längsträgerbereich 33 und der kegeligen Ausführung des Rastbereiches 27 ergebende Selbsthemmungswinkel α vorzugsweise insgesamt 5°nicht übersteigt.

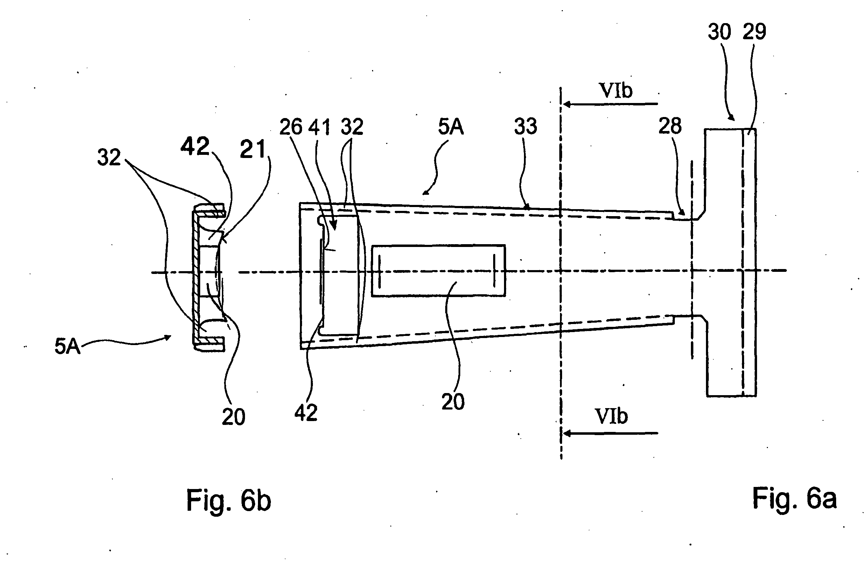

Fig. 6a bis Fig. 9b zeigen verschiedene erfindungsgemäße Ausführungsformen eines Federarms 5A, der jeweils bereichsweise mit verschiedenen Biegesteifigkeiten ausgebildet ist, um die vorbeschriebene Funktionsweise der Verriegelungsvorrichtung 1 sicher gewährleisten zu können.

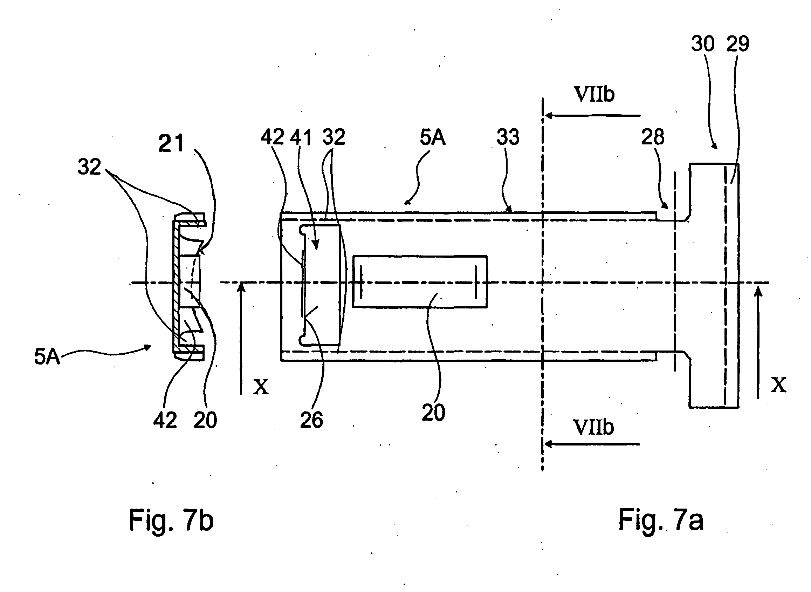

Die in Fig. 6a bis Fig. 9b dargestellten verschiedenen weiteren Ausführungen des Federarms 5A unterscheiden sich im Wesentlichen in der jeweils zur Erhöhung der Biegesteifigkeit ausgewählten Maßnahmen, so dass in der Beschreibung der Ausführungsform des Federarms 5A gemäß Fig. 7a bis 9b lediglich auf die Unterschiede zu der in Fig. 6a und 6b dargestellten Ausführungsform des Federarms 5A näher Bezug genommen wird.

Weiter Bezug nehmend auf Fig. 6a, in der ein Federarm 5A in Alleinstellung in einer Draufsicht gezeigt ist, wird die erfindungsgemäße Gestaltung des Federarms 5A in Verbindung mit der Darstellung von Fig. 6b, welche eine Querschnittsansicht des Federarms 5A gemäß Fig. 6a entlang der Linie Vlb-Vlb zeigt, näher erläutert.

Der Federarm 5A ist im Wesentlichen T-förmig ausgeführt, wobei ein Querträgerbereich 30 des Federarms 5A in montiertem Zustand in eine Nut 31 der fest mit dem Gehäuse 3 der Vorrichtung 1 verbundenen Betätigungseinrichtung 6 eingeführt und im normalen Betrieb der Vorrichtung 1 nicht lösbar mit dieser verbunden ist. Der Querträgerbereich 30 ist mit einem in Fig. 1 dargestellten und mit einem um im Wesentlichen 90° umgebogenen Halteabschnitt 29 ausgeführt, dessen freies Ende wenigstens bereichsweise in der Nut 31 der Betätigungseinrichtung 6 angeordnet und über eine Presspassung fest mit dieser verbunden ist.

An den Querträgerbereich 30 schließt sich der Gelenkbereich 28 an, der zwischen dem Querträgerbereich 30 und dem Längsträgerbereich 33 des Federarms 5A angeordnet ist. Der Gelenkbereich 28 ist aufgrund der vorstehend beschriebenen Funktionalität des Federarms 5A mit einer geringeren Biegesteifigkeit als der Längsträgerbereich 33 ausgeführt, so dass der Federarm 5A um den Gelenkbereich 28 in der zu Fig. 1 näher beschriebenen Art und Weise von dem Löseelement 7 radial verschwenkbar ist. Der Längsträgerbereich 33 ist ausgehend vom Gelenkbereich 28 bis zu seinem Ende mit einer stetig zunehmenden Breite ausgeführt und im Bereich seiner Längsseiten mit Umbiegungen 32 ausgebildet, so dass der Längsträgerbereich 33 im Querschnitt wenigstens annähernd U-förmig ausgebildet ist.

Der Gelenkbereich 28 des Federarms 5A ist vorliegend mit im Wesentlichen gleicher Breite sowie ohne Umbiegungen ausgebildet und weist somit im Vergleich zum Längsträgerbereich 33 eine geringere Biegesteifigkeit auf, womit der Federarm 5A im Gelenkbereich 28 mit der für das Verschwenken der Lasche 42 gewünschten bzw. erforderlichen Bauteilelastizität ausgeführt ist.

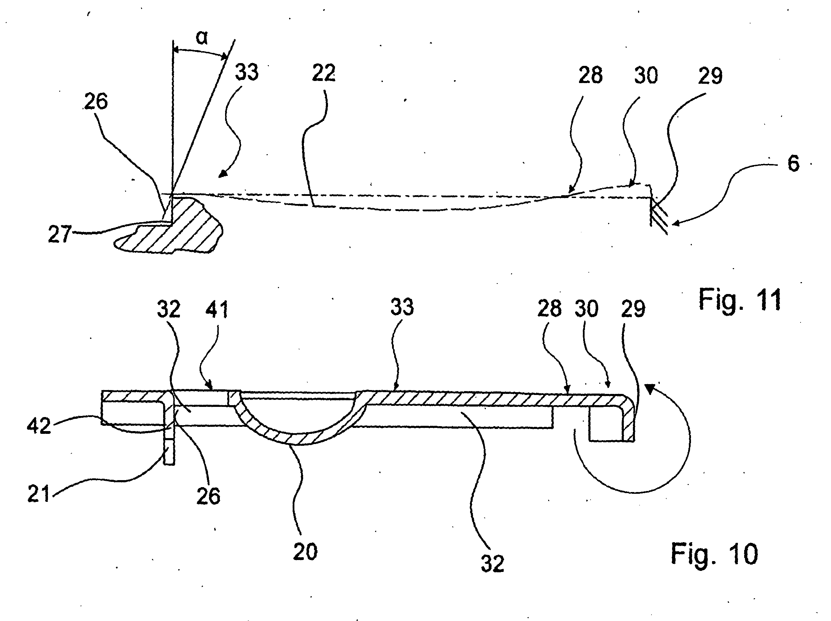

Aufgrund der sich mit zunehmendem Abstand stetig vergrößernden Breite und der U-profilförmigen Ausgestaltung des Längsträgerbereichs 33 ist der Federarm 5A im Längsträgerbereich 33 mit einer derartigen Biegesteifigkeit ausgeführt, dass ein Verformungsgrad des Federarms 5A während einem Deaktivieren der Rasteinrichtung 5 kleiner als ein ein Lösen der Wirkverbindung zwischen dem Federarm 5A und der Kolbeneinrichtung 4 verhindernder Verformungsgrad ist, wobei in diesem Zusammenhang auf die nachfolgende und diesen Sachverhalt näher erläuternde Beschreibung zu Fig. 10 bis Fig. 13 hingewiesen wird.

Zusätzlich ist die Lasche 42 des Federarms 5A im Bereich seines der Kolbeneinheit 4 zugewandten freien Endes 21 mit einer Kreissegmentform ausgeführt, die an die zylindrische Kontur der Kolbeneinheit 4 im verringerten Durchmesserbereich 19 derart angepasst ist, dass der Federarm 5A im Bereich des freien Endes 21 der Lasche 42 im Wesentlichen über den gesamten Kreisbogen an der Mantelfläche des verringerten Durchmesserbereichs 19 der Kolbeneinheit 4 zum Anliegen kommt. Damit ist eine Fläche des Überdeckungsbereichs zwischen dem Rastbereich 27 der Kolbeneinheit 4 und der Anlagefläche 26 des Federarms 5A im Vergleich zu einer geraden Ausführungsform des freien Endes 21 der Lasche 42 derart optimiert, dass eine Flächenpressung im Überdeckungsbereich gering ist und die Kolbeneinheit 4 im Rastbereich 27 mit einer geringeren Bauteilfestigkeit hinsichtlich einer derartigen Belastung ausführbar ist.

Der Rastbereich 27 der Kolbeneinheit 4 schließt vorliegend mit der Mantelfläche des verringerten Durchmesserbereichs der Kolbeneinheit 4 einen Winkel von 90°ein. Des Weiteren ist es vorgesehen, dass die Lasche 42 mit einer derartigen Elastizität ausgeführt ist, dass die Berührungsfläche zwischen der Lasche 42 und dem Rastbereich 27 in aktiviertem Zustand der Rasteinrichtung 5 einen möglichst großen Wert annimmt. Das bedeutet, dass die Lasche 42 bei aktivierter Rasteinrichtung 5 in einem derartigen Umfang verformt wird, dass sich im Überdeckungsbereich des Federarms 5A und der Kolbeneinheit 4 wenigstens eine linienförmige, vorzugsweise jedoch eine flächige, Auflage einstellt und die Flächenpressung gering ist.

Das bedeutet auch, dass die Lasche 42 und der Rastbereich 27 im Überdeckungsbereich jeweils derart zusammenwirken, dass sich eine senkrecht zur Bewegungsrichtung der Kolbeneinheit 4 stehende Ebene 15, die vorliegend ebenfalls mit der Mantelfläche des verringerten Durchmesserbereichs 19 einen Winkel von 90°einschließt, und eine Berührungsebene 16 des Überdeckungsbereiches zwischen dem Rastbereich 27 und der Lasche 42 unter einem jeweils für die einwandfreie Funktionsweise der Vorrichtung 1 erforderlichen Selbsthemmungswinkel a schneiden. Der in Fig. 1 dargestellte Selbsthemmungswinkel α variiert in Abhängigkeit eines Reibungskoeffizienten zwischen der Anlagefläche 26 des Federarms 5A und dem Rastbereich 27, der jeweils in Abhängigkeit des jeweils vorliegenden Anwendungsfalles, zwischen 0° und 5°C, beträgt. So ist ein Selbsthemmungswinkel von ca. 5°für die Funktionsweise der Vorrichtung 1 vorteilhaft, wenn sowohl der Federarm 5A als auch die Kolbeneinheit 4 im Überdeckungsbereich der beiden Bauteile aus Stahl hergestellt sind.

Bei der in Fig. 7a dargestellten Ausführungsform des Federarms 5A ist der Längsträgerbereich 33 im Unterschied zu dem in Fig. 6a gezeigten Federarm 5A mit gleich bleibender Breite ausgeführt. Ansonsten weisen die Federarme gemäß Fig. 6a bzw. gemäß Fig. 7a dieselbe Gestaltung auf. Fig. 7b zeigt den Federarm 5A gemäß Fig. 7a in einer Querschnittsansicht entlang der Linie VIIb-VIIb mit Umbiegungen 32 bzw. Abkantungen, welche im montierten Zustand des Federarms 5A radial in Richtung des Löseelements 7 gerichtet sind. Selbstverständlich liegt es im Ermessen des Fachmanns, die Umbiegungen 32 in entgegengesetzter Richtung umzubiegen, um die Biegesteifigkeit des Längsträgerbereichs 33 in der gewünschten Art und Weise zu erhöhen.

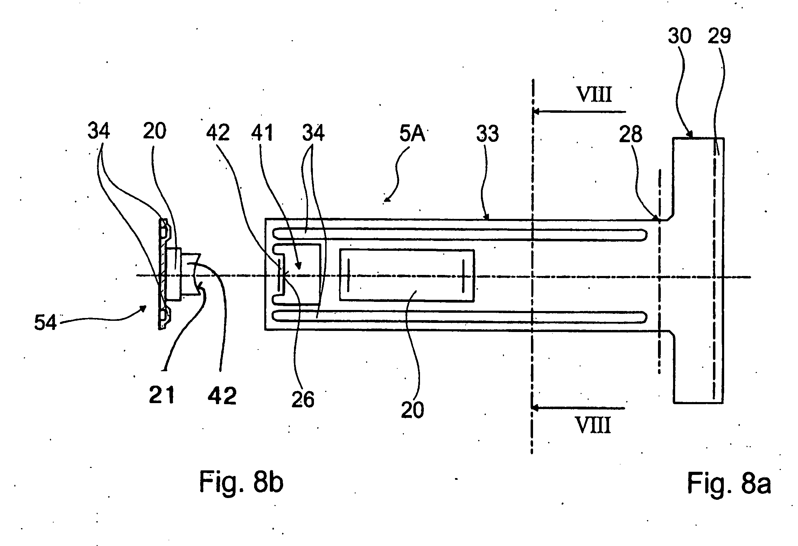

Fig. 8a zeigt eine weitere Ausführungsform eines Federarms 5A in einer Darstellung gemäß Fig. 7a und 7b. Der Federarm 5A gemäß Fig. 8a ist im Längsträgerbereich 33 mit zwei in Längsrichtung des Federarms 5A verlaufenden Versteifungssicken 34 ausgeführt, welche jeweils neben dem während eines Stanz- und Biegeprozesses aus dem Längsträgerbereich 33 herausgearbeiteten Führungsbereich 20 positioniert sind und sich im Wesentlichen über die gesamte Länge des Längsträgerbereichs 33 erstrecken. Die Ausgestaltung der Versteifungssicken 34 ist in der Querschnittsdarstellung gemäß Fig. 8b entlang der Linie VIIIb-VIIIb näher gezeigt und auf einfache Art und Weise kostengünstig im Längsträgerbereich 33 herstellbar.

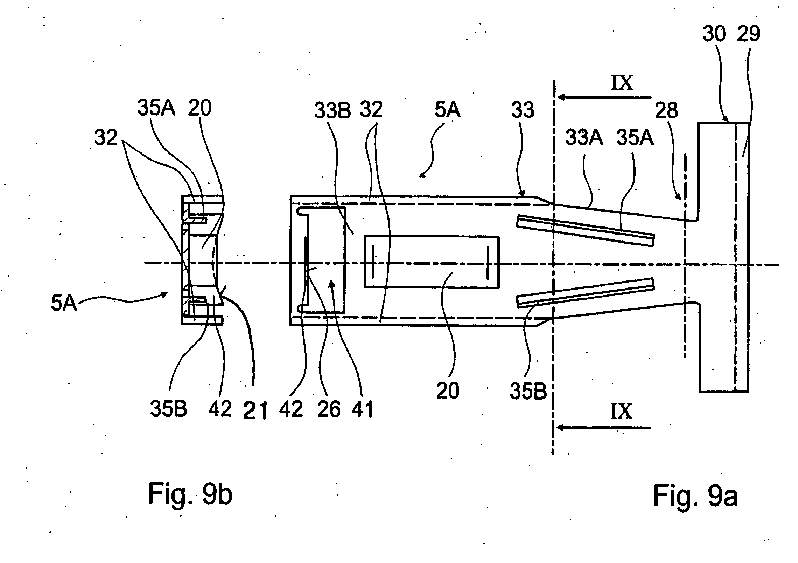

In Fig. 9a ist ein weiteres Ausführungsbeispiel des Federarms 5A der Vorrichtung 1 gezeigt, das sich im Wesentlichen von den in Fig. 6a bis Fig. 8b dargestellten Ausführungsbeispielen im Wesentlichen lediglich im Längsträgerbereich 33 unterscheidet. Der Längsträgerbereich 33 des Federarms 5A gemäß Fig. 9a ist im Wesentlichen zweiteilig ausgeführt, wobei ein erster Abschnitt 33A, der zwischen dem Gelenkbereich 28 und dem zweiten Abschnitt 33B der mit dem Führungsbereich 20 und der Aussparung 41 ausgeführt ist, angeordnet ist. Der erste Abschnitt 33A ist ausgehend von dem Gelenkbereich 28 bis hin zum zweiten Abschnitt 33B mit einer sich stetig vergrößernden Breite sowie mit zwei parallel zu den Außenseiten verlaufenden aus der Oberfläche des Längsträgerbereichs 33 einseitig ausgestanzten und nach unten abgeknickten Versteifungsbereichen 35A und 35B ausgebildet, wobei die Versteifungsbereiche 35A und 35B sich bis in den zweiten Abschnitt 33B des Längsträgerbereichs 33 erstrecken. Der zweite Abschnitt 33B des Längsträgerbereichs 33 ist in Längsrichtung mit gleich bleibender Breite ausgeführt und an seinen Außenseiten in derselben Art und Weise wie die Federarme 5A gemäß Fig. 6a bzw. Fig. 7a mit Umbiegungen 32 ausgebildet, so dass der zweite Abschnitt 338 des Längsträgerbereichs 33 in der in Fig. 9b, in der der Federarm 5A gemäß Fig. 9a in einer Querschnittsansicht entlang der Linie IXb-IXb gezeigt ist, dargestellten Art und Weise wenigstens annähernd U-förmig ausgeführt ist.

Fig. 10 zeigt den in Fig. 7a dargestellten Federarm 5A in einer Längsschnittansicht entlang der Linie X-X in einem lastfreien Zustand. Die Lasche 42 und der Längsträgerbreich 33 des Federarms 5A schließen in lastfreiem Zustand wenigstens annähernd einen Winkel von 90° ein.

Zusätzlich ist in Fig. 11 eine sich unter Last, d. h. während einer Betätigung des Federarms 5A gemäß Fig. 10 durch das Löseelement 7, die den Federarm 5A aus dem Eingriff mit der Kolbeneinheit führt, einstellende Biegelinie 22 gezeigt. Aus der Darstellung gemäß Fig. 11 ist ersichtlich, dass sich der Federarm 5A gemäß Fig. 10 unter Last im Wesentlichen über seine gesamte Länge wenigstens annähernd parabelförmig verformt. Sowohl der Querträgerbereich 30, und der Längsträgerbereich 33 als auch die Lasche 42 werden derart verformt, dass die Lasche 42 unter Last die für die Einhaltung des Selbsthemmungswinkels α erforderliche Anordnung in Bezug auf den Rastbereich 27 der Kolbeneinheit 4 einnimmt. Dabei besteht die Möglichkeit, den Federarm 5A derart auszuführen, dass sich der Winkel zwischen der Lasche 42 und dem Längsträgerbereich 33 unter Last dahingehend verändert, dass sich der für ein störungsfreies Lösen der Wirkverbindung zwischen dem Federarm 5A und der Kolbeneinheit 4 erforderliche Selbsthemmungswinkel α sicher einstellt.

Hiervon abweichend kann der Federarm 5A aber auch im Übergangsbereich zwischen der Lasche 42 und dem Längsträgerbereich 33 mit einer derartigen Steifigkeit ausgeführt sein, dass sich der Winkel zwischen der Lasche 42 und dem Längsträgerbreich 33 unter Last nicht verändert und sich der Selbsthemmungswinkel α im Überdeckungsbereich aufgrund einer entsprechenden Verformung der übrigen Abschnitte des Federarms 5A einstellt.

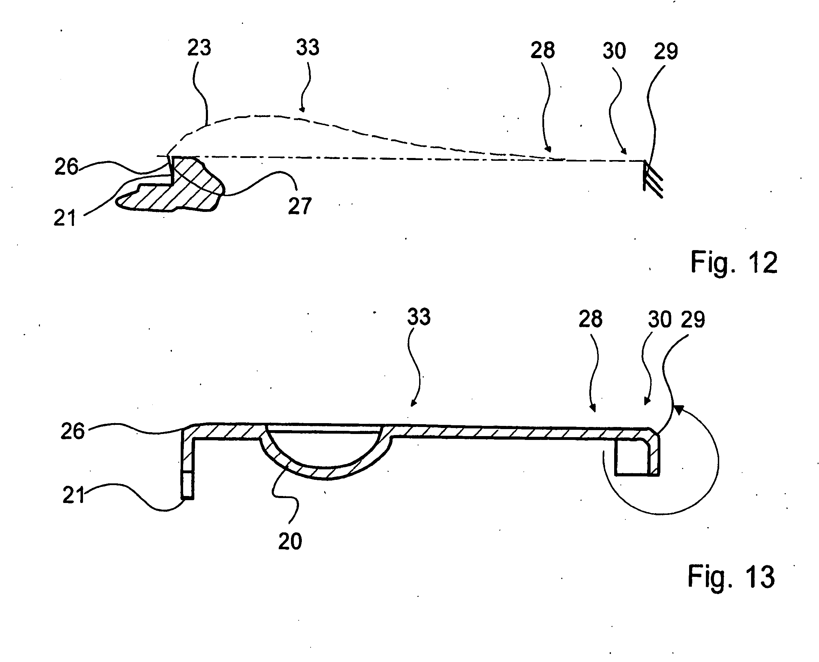

In der nicht beanspruchten Ausführungsform gemäß Fig. 12 ist eine zu Fig. 10 korrespondierende Darstellung eines Federarms 40 gezeigt, der im Gegensatz zu dem in Fig. 10 gezeigten Federarm 5A im Längsträgerbereich 33 ohne die vorbeschriebenen Versteifungsmaßnahmen sowie ohne Aussparung 41 und ohne Lasche 42 ausgeführt ist, so dass der Federarm 40 über seine gesamte Länge mit einer im Wesentlichen gleich bleibenden Biegesteifigkeit ausgebildet ist und die Haltekraft mit einem großen Hebelarm x in den Federarm 40 eingeleitet wird.

Fig. 13 stellt eine Biegelinie 23 des Federarms 40 dar, die sich während einer Betätigung des Federarms 40 durch das Löseelement 7, d. h. unter Last, während einer Deaktivierung der Rasteinrichtung 5 einstellt.

Bei genauerer Betrachtung der Biegelinie 23 des Federarms 40 ist ersichtlich, dass der Federarm 40 im Angriffsbereich des Löseelementes 7, d. h. im Führungsbereich 20 des Federarms 40 eine starke Aufwölbung aufweist, so dass ein Krallenbereich 50, der bei aktivierter Rasteinrichtung 5 möglichst flächig an dem Rastbereich 27 der Kolbeneinheit 4 anliegt, in der in Fig. 13 dargestellten Art und Weise um sein freies Ende 21 in erheblichem Umfang von dem Rastbereich 27 weg verschwenkt wird und der für eine einwandfreie Funktionalität der Vorrichtung 1 erforderliche Selbsthemmungswinkel α zwischen dem Krallenbereich 50 und dem Rastbereich 27 nicht mehr vorliegt.

Der in Fig. 13 dargestellte Verformungsgrad des Federarms 40 ist nachteilhafterweise derart, dass der Selbsthemmungswinkel α im Überdeckungsbereich zwischen dem Krallenbereich 50 des Federarms 40 und der Kolbeneinheit 4 so stark verändert ist, dass der Federarm 40 aufgrund zu hoher Reibkräfte im Überdeckungsbereich zwischen dem Krallenbereich 50 des Federarms 40 und dem Rastbereich 33 der Kolbeneinheit 4 nicht mehr aus dem Eingriff mit der Kolbeneinheit 4 geführt werden kann und somit eine Funktionsblockade der Verriegelungsvorrichtung 1 kaum vermeidbar ist. In diesem Fall stellen der Querträgerbereich 30 und der Krallenbereich 50 des Federarms 40 nachteilhafterweise so genannte Einspannstellen des Federarms 40 dar, zwischen welchen der Federarm 40 durch das am Führungsbereich 20 angreifende Löseelement 7 in der in Fig. 13 dargestellten Art und Weise verformt wird, ohne die Rasteinrichtung 5 zu deaktivieren.

Zudem wird der Krallenbereich 50 des Federarms 40 entgegen seiner während der Herstellung vorgesehenen Biegerichtung belastet. Diese Belastung ist nachteilhaft und führt zu einer unerwünschten Reduzierung der Lebensdauer eines Federarms, da der gebogene Bereich zwischen dem Längsträgerbereich 33 und dem Krallenbereich 50 eine Sollbruchstelle darstellt, deren Festigkeit bei einer Belastung entgegen der Herstellbiegerichtung wesentlich geringer ist als bei einer Belastung in Herstellbiegerichtung, wie es bei der erfindungsgemäßen Verriegelungsvorrichtung 1 vorgesehen ist.

### Bezugszeichen

- 1: Vorrichtung
- 3: Gehäuse
- 4: Kolbeneinheit
- 5: Rasteinrichtung
- 5A: Federarm
- 6: Betätigungseinrichtung
- 7: Löseelement
- 8: Kolbenstange
- 10: Federring
- 11: Federelement
- 12: Innenanschlag
- 13: Bohrung
- 14: Mittelachse
- 15: senkrechte Ebene
- 16: Berührungsebene
- 17: konischer Bereich der Kolbeneinheit
- 18: Ringraum
- 19: verringerter Durchmesserbereich der Kolbeneinheit
- 20: Führungsbereich der Federarme
- 21: freies Ende der Lasche
- 22: Biegelinie
- 23: Biegelinie
- 25: Führungsfläche des Löseelements
- 26: Anlagefläche
- 27: Rastbereich
- 28: Gelenkbereich
- 29: Halteabschnitt
- 30: Querträgerbereich des Federarms
- 31: Nut
- 32: Umbiegungen
- 33: Längsträgerbereich
- 33A: erster Abschnitt des Längsträgerbereichs
- 33B: zweiter Abschnitt des Längsträgerbereichs
- 34: Versteifungssicken
- 35A, 35B: Versteifungsbereiche
- 40: Federarm
- 41: Aussparung
- 42: Lasche
- 50: Krallenbereich

- R5A: Biegeradius
- R41A: Stanzradius
- R41 B: Stanzradius
- α: Selbsthemmungswinkel

## Patentansprüche

1. Verriegelungsvorrichtung (1), insbesondere einer Parksperreneinrichtung eines mit einem Automatgetriebe ausgeführten Antriebsstranges eines Fahrzeuges, die eine in axialer Richtung in einem Gehäuse (3) verschiebbar angeordnete und in einer vordefinierten axialen Position arretierbare Kolbeneinheit (4) und eine in der arretierten Position der Kolbeneinheit selbsttätig aktivierende Rasteinrichtung (5) zum Halten der Kolbeneinheit (4) aufweist, wobei die Rasteinrichtung (5) mit wenigstens einem mit der Kolbeneinheit (4) in der arretierten Position der Kolbeneinheit (4) in Wirkverbindung stehenden Federarm (5A, 5B) ausgeführt ist, an dem die Kolbeneinheit (4) in der arretierten Position mit einem Rastbereich (27) anliegt, **dadurch gekennzeichnet, dass** der Federarm (5A) mit einer Aussparung (41) ausgeführt ist und die Kolbeneinheit (4) die Aussparung (41) des Federarms (5A) mit einem den Rastbereich (27) ausbildenden Abschnitt in radialer Richtung wenigstens annähernd durchgreift, so dass der Rastbereich (27) der Kolbeneinheit (4) in arretiertem Zustand der Kolbeneinheit 4 zumindest in einem der Längsebene des Federarms (5A) nahen Bereich, vorzugsweise in der Längsebene des Federarms (5A), angeordnet ist.

2. Verriegelungsvorrichtung nach Anspruch 1, **dadurch gekennzeichnet, dass** eine Anlagefläche (26) des Federarms (5A) für den Rastbereich (27) der Kolbeneinheit (4) als eine die Aussparung (41) in der Längsebene des Federarms (5A) begrenzende Seitenfläche ausgeführt ist.

3. Verriegelungsvorrichtung nach Anspruch 1 oder 2, **dadurch gekennzeichnet, dass** die Aussparung (41) durch Ausstanzen hergestellt ist.

4. Verriegelungsvorrichtung nach Anspruch 3, **dadurch gekennzeichnet, dass** die Aussparung (41) durch bereichsweises Ausstanzen und Umbiegen des ausgestanzten Bereiches (42) gegenüber der Längsebene des Federarms (5A) hergestellt ist, wobei die Kolbeneinheit (4) in arretiertem Zustand an dem aus der Längsebene des Federarms (5A) heraus gebogenen Bereich (42) anliegt und den gebogenen Bereich (42) in Biegerichtung belastet.

5. Verriegelungsvorrichtung nach Anspruch 3 oder 4, **dadurch gekennzeichnet, dass** ein Stanzradius (R41A, R41 B) im Bereich der Anlagefläche einen eine Kerbwirkung minimierenden Wert aufweist.

6. Verriegelungsvorrichtung nach einem der Ansprüche 1 bis 5, **dadurch gekennzeichnet, dass** der Federarm (5A) wenigstens abschnittsweise im Querschnitt im Wesentlichen U-förmig ausgebildet ist, wobei der Federarm (5A) vorzugsweise in einem Längsträgerbreich (33) radial und tangential gerichtete Umbiegungen (32) aufweist, die den im Wesentlichen U-förmigen Querschnitt des Federarms (5A) bewirken.

7. Verriegelungsvorrichtung nach einem der Ansprüche 1 bis 6, **dadurch gekennzeichnet, dass** der Federarm (5A) wenigstens bereichsweise mit mindestens einer im Wesentlichen in Längsrichtung des Federarms (5A) verlaufenden Versteifungssicke (34) ausgebildet ist.

8. Verriegelungsvorrichtung nach einem der Ansprüche 1 bis 7, **dadurch gekennzeichnet, dass** der Federarm (5A) wenigstens bereichsweise mit mindestens einem im Wesentlichen in Längsrichtung des Federarms (5A) verlaufenden Versteifungsbereich (35A, 35B) ausgeführt ist.

9. Verriegelungsvorrichtung nach einem der Ansprüche 1 bis 8, **dadurch gekennzeichnet, dass** zwischen der in montiertem Zustand des Federarms (5A) mit dem Rastbereich (27) der Kolbeneinheit (4) in Überdeckung bringbaren Anlagefläche (26) und dem Rastbereich (27) der Kolbeneinheit (4) in aktiviertem Zustand der Rasteinrichtung (5) wenigstens Linienberührung, vorzugsweise eine flächige Anlage, vorliegt.

10. Verriegelungsvorrichtung nach Anspruch 9, **dadurch gekennzeichnet, dass** der Federarm (5A) im Bereich der Anlagefläche (26) mit einer derartig an die äußere Form der Kolbeneinheit (4) angepassten Kontur ausgeführt ist, dass eine Fläche des Überdeckungsbereichs zwischen dem Rastbereich (27) der Kolbeneinheit (4) und der Anlagefläche (26) des Federarms (5A) maximal ist.

11. Verriegelungsvorrichtung nach Anspruch 9 oder 10, **dadurch gekennzeichnet, dass** die Anlagefläche (26) und der Rastbereich (27) im Überdeckungsbereich jeweils derart ausgeführt sind, dass sich eine senkrecht zur Bewegungsrichtung der Kolbeneinheit (4) stehende Ebene (15) und eine Berührungsebene (16) des Überdeckungsbereichs zwischen dem Rastbereich (27) und der Anlagefläche (26) bei Betriebsbelastung in einem Winkel (α) von 0° bis 5° schneiden.

12. Verriegelungsvorrichtung nach einem der Ansprüche 1 bis 11, **dadurch gekennzeichnet, dass** der Federarm (5A) aus Federstahlmaterial hergestellt ist.

## Claims

1. Locking apparatus (1), in particular a parking immobilizer of a drive train, embodied with an automatic transmission, of a vehicle, which has a piston unit (4) which is arranged so as to be displaceable in the axial direction in a housing (3) and can be locked in a predefined axial position, and a latching device (5), which can be automatically activated in the locked position of the piston unit, in order to secure the piston unit (4), wherein the latching device (5) is embodied with at least one spring arm (5A, 5B) which is operatively connected to the piston unit (4) in the locked position of the piston unit (4), against which arm (5A, 5B) the piston unit (4) bears with a latching region (27) in the locked position, **characterized in that** the spring arm (5A) is embodied with a recess (41), and the piston unit (4) at least approximately engages through the recess (41) in the spring arm (5A) in the radial direction with a section which forms the latching region (27), with the result that in the locked state of the piston unit (4) the latching region (27) of the piston unit (4) is arranged at least in a region which is close to the longitudinal plane of the spring arm (5A), preferably in the longitudinal plane of the spring arm (5A).

2. Locking apparatus according to Claim 1, **characterized in that** a bearing face (26) of the spring arm (5A) for the latching region (27) of the piston unit (4) is embodied as a side face which bounds the recess (41) in the longitudinal plane of the spring arm (5A).

3. Locking apparatus according to Claim 1 or 2, **characterized in that** the recess (41) is manufactured by punching.

4. Locking apparatus according to Claim 3, **characterized in that** the recess (41) is manufactured by punching in a certain region and by bending over the punched-out region (42) with respect to the longitudinal plane of the spring arm (5A), wherein, in the locked state, the piston unit (4) bears against the region (42) which is bent out of the longitudinal plane of the spring arm (5A) and loads the bent region (42) in the bending direction.

5. Locking apparatus according to Claim 3 or 4, **characterized in that** a punching radius (R41A, R41B) has, in the region of the bearing face, a value which minimizes a notch effect.

6. Locking apparatus according to one of Claims 1 to 5, **characterized in that** the spring arm (5A) is embodied with an essentially U-shaped cross section at least in certain sections, wherein the spring arm (5A) preferably has bent-over portions (32) which are directed radially and tangentially in a longitudinal carrier region (33) and which give rise to the essentially U-shaped cross section of the spring arm (5A).

7. Locking apparatus according to one of Claims 1 to 6, **characterized in that** the spring arm (5A) is embodied, at least in a certain region, with at least one reinforcing bead (34) which runs essentially in the longitudinal direction of the spring arm (5A).

8. Locking apparatus according to one of Claims 1 to 7, **characterized in that** the spring arm (5A) is embodied, at least in a certain region, with at least one reinforcing region (35A, 35B) which runs essentially in the longitudinal direction of the spring arm (5A).

9. Locking apparatus according to one of Claims 1 to 8, **characterized in that** at least line contact, preferably support over a surface, occurs between the bearing face (26) which can be placed in congruence with the latching region (27) of the piston unit (4) in the mounted state of the spring arm (5A) and the latching region (27) of the piston unit (4) in the activated state of the latching device (5).

10. Locking apparatus according to Claim 9, **characterized in that** the spring arm (5A) is embodied in the region of the bearing face (26) with a contour which is adapted to the external shape of the piston unit (4) in such a way that a face of the congruent region between the latching region (27) of the piston unit (4) and the bearing face (26) of the spring arm (5A) is at a maximum.

11. Locking apparatus according to Claim 9 or 10, **characterized in that** the bearing face (26) and the latching region (27) are respectively embodied in the congruent region in such a way that a plane (15) which is perpendicular to the direction of movement of the piston unit (4) and a contact plane (16) of the congruent region between the latching region (27) and the bearing face (26) intersect at an angle (α) of 0° to 5° during operational loading.

12. Locking apparatus according to one of Claims 1 to 11, **characterized in that** the spring arm (5A) is manufactured from a spring steel material.

## Revendications

1. Dispositif de verrouillage (1), en particulier dispositif de verrouillage de stationnement d'un système de transmission d'un véhicule réalisé avec une boîte de vitesses automatique, le dispositif de verrouillage présentant une unité de piston (4) disposée de manière déplaçable dans une direction axiale dans un boîtier (3) et pouvant être bloquée dans une position axiale prédéfinie, et un dispositif d'encliquetage (5) pour retenir l'unité de piston (4), s'actionnant automatiquement dans la position de verrouillage de l'unité de piston, le dispositif d'encliquetage (5) étant réalisé avec au moins un bras de ressort (5A, 5B) en liaison fonctionnelle avec l'unité de piston (4) dans la position de verrouillage de l'unité de piston (4), sur lequel l'unité de piston (4) s'applique dans la position de verrouillage par une région d'encliquetage (27), **caractérisé en ce que** le bras de ressort (5A) est réalisé avec un évidement (41) et l'unité de piston (4) s'engage dans la direction radiale au moins approximativement à travers l'évidement (41) du bras de ressort (5A) avec une portion constituant la région d'encliquetage (27), de sorte que la région d'encliquetage (27) de l'unité de piston (4), dans l'état verrouillé de l'unité de piston (4), soit disposée au moins dans une région proche du plan longitudinal du bras de ressort (5A), de préférence dans le plan longitudinal du bras de ressort (5A).

2. Dispositif de verrouillage selon la revendication 1, **caractérisé en ce qu'**une surface d'appui (26) du bras de ressort (5A) pour la région d'encliquetage (27) de l'unité de piston (4) est réalisée sous forme de surface latérale limitant l'évidement (41) dans le plan longitudinal du bras de ressort (5A).

3. Dispositif de verrouillage selon la revendication 1 ou 2, **caractérisé en ce que** l'évidement (41) est fabriqué par estampage.

4. Dispositif de verrouillage selon la revendication 3, **caractérisé en ce que** l'évidement (41) est fabriqué par estampage partiel et cintrage de la région estampée (42) par rapport au plan longitudinal du bras de ressort (5A), l'unité de piston (4) s'appliquant dans l'état verrouillé contre la région (42) cintrée hors du plan longitudinal du bras de ressort (5A), et sollicitant la région cintrée (42) dans la direction de cintrage.

5. Dispositif de verrouillage selon la revendication 3 ou 4, **caractérisé en ce qu'**un rayon d'estampage (R41A, R41B) dans la région de la surface d'appui présente une valeur minimisant l'effet d'entaille.

6. Dispositif de verrouillage selon l'une quelconque des revendications 1 à 5, **caractérisé en ce que** le bras de ressort (5A) est réalisé au moins en partie essentiellement en forme de U en section transversale, le bras de ressort (5A) présentant de préférence dans une région de support longitudinal (33) des courbures (32) orientées radialement et tangentiellement, qui constituent la section transversale essentiellement en forme de U du bras de ressort (5A).

7. Dispositif de verrouillage selon l'une quelconque des revendications 1 à 6, **caractérisé en ce que** le bras de ressort (5A) est réalisé au moins en partie avec au moins une moulure de renforcement (34) s'étendant essentiellement dans la direction longitudinale du bras de ressort (5A).

8. Dispositif de verrouillage selon l'une quelconque des revendications 1 à 7, **caractérisé en ce que** le bras de ressort (5A) est réalisé au moins en partie avec au moins une région de renforcement (35A, 35B) s'étendant essentiellement dans la direction longitudinale du bras de ressort (5A).

9. Dispositif de verrouillage selon l'une quelconque des revendications 1 à 8, **caractérisé en ce qu'**il se produit entre la surface d'appui (26) pouvant être amenée en coïncidence dans l'état monté du bras de ressort (5A) avec la région d'encliquetage (27) de l'unité de piston (4), et la région d'encliquetage (27) de l'unité de piston (4), dans l'état activé du dispositif d'encliquetage (5), au moins un contact linéaire, de préférence une application à plat.

10. Dispositif de verrouillage selon la revendication 9, **caractérisé en ce que** le bras de ressort (5A), dans la région de la surface d'appui (26), est réalisé avec un contour adapté à la forme extérieure de l'unité de piston (4), de telle sorte qu'une surface de la région de coïncidence entre la région d'encliquetage (27) de l'unité de piston (4) et la surface d'appui (26) du bras de ressort (5A) soit maximale.

11. Dispositif de verrouillage selon la revendication 9 ou 10, **caractérisé en ce que** la surface d'appui (26) et la région d'encliquetage (27) sont chacune réalisées dans la région de coïncidence de telle sorte qu'un plan (15) perpendiculaire à la direction de déplacement de l'unité de piston (4) et un plan de contact (16) de la région de coïncidence entre la région d'encliquetage (27) et la surface d'appui (26) se coupent en cas de contrainte fonctionnelle suivant un angle (α) de 0° à 5°.

12. Dispositif de verrouillage selon l'une quelconque des revendications 1 à 11, **caractérisé en ce que** le bras de ressort (5A) est fabriqué en acier à ressort.
